(19) Europäisches Patentamt
European Patent Office
Office européen des brevets

(11) **EP 3 944 368 A1**

(12) **EUROPEAN PATENT APPLICATION**

(43) Date of publication:
**26.01.2022 Bulletin 2022/04**

(21) Application number: **21186341.0**

(22) Date of filing: **19.07.2021**

(51) International Patent Classification (IPC):
*H01M 4/133* (2010.01)   *H01M 4/134* (2010.01)
*H01M 4/36* (2006.01)   *H01M 4/38* (2006.01)
*H01M 4/48* (2010.01)   *H01M 4/587* (2010.01)
*H01M 4/62* (2006.01)   *H01M 10/0525* (2010.01)
*H01M 50/105* (2021.01)   *H01M 4/02* (2006.01)

(52) Cooperative Patent Classification (CPC):
**H01M 4/134; H01M 4/133; H01M 4/364;**
**H01M 4/366; H01M 4/386; H01M 4/48;**
**H01M 4/587; H01M 4/622; H01M 10/0525;**
H01M 50/105; H01M 2004/027

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.07.2020 KR 20200091043**

(71) Applicant: **SK Innovation Co., Ltd.**
**Seoul 03188 (KR)**

(72) Inventors:
• **Bae, Ji Hee**
 **34124 Dajeon (KR)**

• **Kim, Jung Hwan**
 **34124 Daejeon (KR)**
• **Lee, Yong Seok**
 **34124 Daejeon (KR)**
• **Min, Jae Yun**
 **34124 Daejeon (KR)**
• **Bae, Sang Won**
 **34124 Daejeon (KR)**
• **Lee, Myung Ro**
 **34124 Daejeon (KR)**

(74) Representative: **Stolmár & Partner**
**Patentanwälte PartG mbB**
**Blumenstraße 17**
**80331 München (DE)**

(54) **LITHIUM SECONDARY BATTERY**

(57)    A lithium secondary battery includes an anode including an anode current collector and an anode active material layer formed thereon, the anode active material layer including an acryl-based binder, a cathode facing the anode, an anode tab electrically connected to the anode, and a cathode tab electrically connected to the cathode. A content of the acryl-based binder and a distance between the cathode tab and the anode tab satisfies a predetermined relation to provide the lithium secondary battery having improved mechanical stability and battery performance.

**EP 3 944 368 A1**

**Description**

CROSS-REFERENCE TO RELATED APPLICATION AND CLAIM OF PRIORITY

This application claims priority to Korean Patent Application No. 10- 2020-0091043 filed on July 22, 2020 in the Korean Intellectual Property Office (KIPO), the entire disclosure of which is incorporated by reference herein.

BACKGROUND

1. Field

The present invention relates to a lithium secondary battery. More particularly, the present invention relates to a lithium secondary battery having improved stability and life-span property.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as a hybrid automobile.

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

Recently, as an application of the lithium secondary battery is expanded, the lithium secondary having higher power and capacity is being developed. For example, cathode or active materials capable of providing higher capacity are researched.

For example, alternative materials for the anode which can replace a conventional carbon-based material are being studied. When an anode active material is changed, a binder that may contact or react with the anode active material also needs to be changed or newly designed. However, mechanical deformation of the anode may be caused by the binder, and stability and life-span of the anode or the battery may also be deteriorated.

For example, Korean Registered Patent Publication No. 10-1764072 discloses a binder for a lithium iron phosphate electrode coated with carbon.

SUMMARY

According to an aspect of the present invention, there is provided a lithium secondary battery having improved mechanical stability and operational reliability.

According to exemplary embodiments, a lithium secondary battery includes an anode including an anode current collector and an anode active material layer formed thereon, the anode active material layer including an acryl-based binder, a cathode facing the anode, an anode tab electrically connected to the anode, and a cathode tab electrically connected to the cathode. The lithium secondary battery satisfies Equation 1.

$$[\text{Equation 1}]$$

$$3.6^{M/wt\%} + 95.1 \leq D_T/mm$$

In Equation 1, M is a content of the acryl-based binder expressed by weight percent (wt%) based on a total weight of the anode active material layer, and $D_T$ is a distance expressed by millimeter (mm) between the anode tab and the cathode tab, and $1 \leq M \leq 4$.

In some embodiments, the anode active material layer may include a silicon-based anode active material.

In some embodiments, the silicon-based anode active material may include at least one selected from the group consisting of silicon (Si), a silicon alloy, silicon oxide, a silicon-carbon (Si-C) composite and a silicon alloy-carbon composite.

In some embodiments, the anode active material layer may further include a carbon-based anode active material.

In some embodiments, the carbon-based anode active material may include at least one selected from the group consisting of artificial graphite, natural graphite, amorphous carbon, a carbon fiber, cokes and pyrolytic carbon.

In some embodiments, a content of the silicon-based anode active material may be from 3 wt% to 40 wt% based on the total weight of the anode active material layer.

In some embodiments, the acryl-based binder may include at least one polymer selected from the group consisting of an acrylic acid-based polymer, an acrylic lithium-based polymer and an acrylonitrile-based polymer.

In some embodiments, the cathode tab and the anode tab may protrude in the same direction.

In some embodiments, an electrode assembly including the cathode tab and the anode tab may be defined, and the electrode assembly includes a plurality of electrode assemblies.

In some embodiments, a volume expansion ratio of the anode when being fully charged may be 40% or less.

In the lithium secondary battery according to exemplary embodiments as described above, a content of an acryl-based binder and a distance between electrode tabs may be adjusted to satisfy a predetermined relation so that wrinkles of electrodes may be suppressed and a volume expansion ratio may be reduced. Thus, stability and life-span of the lithium secondary battery may be improved.

In exemplary embodiments, an anode active material layer of the lithium secondary battery may include a silicon-based anode active material to improve power/capacity of the lithium secondary battery while enhancing mechanical and chemical stability as described above.

BRIEF DESCRIPTION OF THE DRAWINGS

FIG. 1 is a schematic top planar view illustrating a lithium secondary battery in accordance with exemplary embodiments.

FIG. 2 is a schematic cross-sectional view illustrating a lithium secondary battery in accordance with exemplary embodiments.

FIG. 3 is an image showing an electrode surface after an electrode wrinkle evaluation from a lithium secondary battery of Example 1.

FIG. 4 is an image showing an electrode surface after an electrode wrinkle evaluation from a lithium secondary battery of Comparative Example 1.

FIG. 5 is an image showing an electrode surface after an electrode wrinkle evaluation from a lithium secondary battery of Comparative Example 4.

DETAILED DESCRIPTION OF THE EMBODIMENTS

According to exemplary embodiments of the present invention, a lithium secondary battery including an acryl-based binder and providing improved mechanical stability and operable property is provided.

Hereinafter, the present invention will be described in detail with reference to the accompanying drawings. However, those skilled in the art will appreciate that such embodiments described with reference to the accompanying drawings are provided to further understand the spirit of the present invention and do not limit subject matters to be protected as disclosed in the detailed description and appended claims.

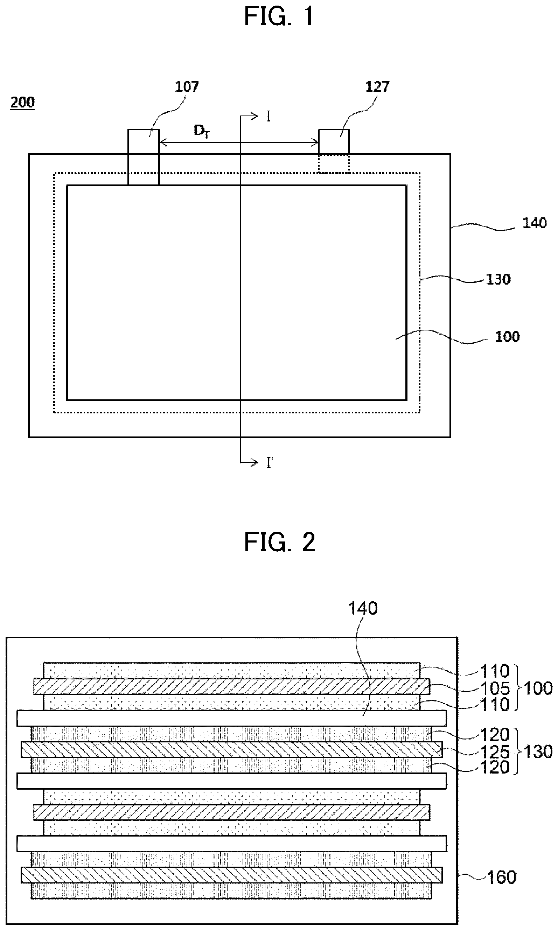

FIG. 1 is a schematic top planar view illustrating a lithium secondary battery in accordance with exemplary embodiments.

Referring to FIG. 1, a lithium secondary battery 200 may include a cathode 100 and an anode 130 facing each other with a separation layer 140 interposed therebetween.

In FIG. 1, only one cathode 100 and one anode 130 on upper and lower surfaces of the separation layer 140, respectively, are illustrated for convenience of descriptions, but a plurality of unit cells each including the cathode 100-the separation layer 140-the anode 130 may be repeatedly stacked.

The cathode 100 may include a cathode current collector 105 and a cathode active material layer 110 formed on a surface of the cathode current collector 105 .

The cathode current collector 105 may include stainless-steel, nickel, aluminum, titanium, copper or an alloy thereof. Preferably, aluminum or an alloy thereof may be used.

The cathode active material layer 110 may be formed at least one of an upper surface and a lower surface of the cathode current collector 105. In exemplary embodiments, the cathode active material layer 110 may be formed on each of the upper surface and the lower surface of the cathode current collector 105.

For example, a cathode active material may be mixed and stirred together with a cathode binder, a conductive agent and/or a dispersive additive in a solvent to form a cathode slurry. The cathode slurry may be coated on the cathode current collector 105, and dried and pressed to form the cathode active material layer 110.

The cathode active material may include a compound capable of reversibly intercalating and de-intercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may be represented by Chemical Formula 1 below.

[Chemical Formula 1]  $Li_{1+a}Ni_{1-(x+y)}Co_xM_yO_2$

In Chemical Formula 1, $-0.05 \leq \alpha \leq 0.15$, $0.01 \leq x \leq 0.3$, $0.01 \leq y \leq S0.3$ and M may include at least one element selected from the group consisting of Mn, Mg, Sr, Ba, B, Al, Si, Ti, Zr and W.

The cathode binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive agent may be added to facilitate electron mobility between active material particles. For example, the conductive agent may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

The anode 130 may include an anode current collector 125 and an anode active material layer 120 formed on a surface of the anode current collector 125.

The anode current collector 125 may include, e.g., gold, stainless steel, nickel, aluminum, titanium, copper or an alloy thereof, preferably may include copper or a copper alloy.

The anode active material layer 120 may be formed on at least one of upper and lower surfaces of the anode current collector 125. In exemplary embodiments, the anode active material layer 120 may be formed on each of the upper surface and the lower surface of the anode current collector 125.

For example, an anode slurry may be prepared by mixing and stirring an anode active material with an anode binder, a conductive agent and/or a dispersive additive in a solvent. The anode slurry may be coated on the anode current collector 125, and then dried and pressed to form the anode active material layer 120.

In exemplary embodiments, the anode active material may include a silicon (Si)-based anode active material. For example, the silicon-based anode active material may include at least one of silicon (Si), a silicon alloy, silicon oxide, a silicon-carbon (Si-C) composite and a silicon alloy-carbon composite.

Conventionally, a carbon-based active material has been mainly used as the anode active material, but a theoretical capacity obtained from the carbon-based active material may be limited to a level of about 370 mAh/g. However, according to exemplary embodiments of the present invention, the silicon-based material having a theoretical capacity ten times or more a theoretical capacity from graphite (e.g., a theoretical capacity of about 4,200 mAh/g) may be included in the anode active material layer to remarkably enhance power and capacity properties of a secondary battery.

In exemplary embodiments, the silicon-based anode active material may be included in an amount of 3 weight percent (wt%) to 40 wt% based on a total weight of the anode active material layer.

If the weight ratio of the silicon-based active material is less than about 3 wt%, the effect of increasing capacity/power through the silicon-based active material may not be sufficiently realized. If the weight ratio of the silicon-based active material exceeds about 40 wt%, an excessively large volume change may occur during charging and discharging due to insertion and removal of lithium ions to cause an anode expansion and degrade stability of the secondary battery.

In exemplary embodiments, the anode active material layer 120 may further include a carbon-based anode active material. For example, the carbon-based anode active material may include at least one of artificial graphite, natural graphite, amorphous carbon, carbon fiber, cokes and a pyrolytic carbon. In some embodiments, a graphite-based material may be used as the carbon-based anode active material, and preferably, artificial graphite or a mixture of natural graphite and artificial graphite may be used.

The carbon-based active material may be used together with the silicon-based active material so that the excessive electrode expansion by the silicon-based active material may be buffered during repeated charging and discharging.

For example, a mixture or blend of the silicon-based active material and the carbon-based active material may include a silicon-carbon-based active material. The silicon-carbon-based active material may include, e.g., silicon carbide (SiC) or a silicon-carbon particle having a core-shell structure. The silicon-carbon particle may be formed by, e.g.,

depositing a silicon layer on a surface of a graphite core.

In an embodiment, a silicon layer may be coated on a commercially available graphite particle by a chemical vapor deposition (CVD) process using a silicon precursor compound such as a silane-based compound to form the silicon-carbon particle.

In exemplary embodiments, the anode active material layer 120 may include an acryl-based binder. For example, the acryl-based binder may include at least one polymer selected from an acrylic acid-based polymer, an acrylic lithium-based polymer and an acrylonitrile-based polymer.

The acryl-based binder has a relatively high tensile strength (modulus), and thus may suppress expansion/contraction of the silicone-based active material to prevent decomposition and collapse of the active material. Thus, even when the silicon-based active material expands, peeling, lifting, cracks, voids, etc., of the anode active material layer 120 may be prevented, and stable capacity and power of the secondary battery may be maintained for a long period even when charging/discharging may be repeatedly performed.

In some embodiments, the acryl-based binder may include polyacrylic acid (PAA) and/or polyacrylamide. For example, an SEI (Solid Electrolyte Interphase) layer may be formed on a surface of the silicone-based active material through an interaction of an electrolyte with a carboxyl group of polyacrylic acid or an amide group of polyacrylamide.

Accordingly, an excessive expansion of the silicon-based active material may be suppressed while preventing an irreversible decomposition of the electrolyte. For example, the acryl-based binder may be used by being blended with polyvinyl alcohol (PVA). Polyvinyl alcohol may be included to further promote the formation of the SEI layer through a hydrophilic interaction.

In exemplary embodiments, the acryl-based binder may be included in an amount of about 1 wt% to 5 wt% based on the total weight of the anode active material layer 120. For example, an amount of the anode active material may be from about 90 wt% to 98 wt%, an amount of the anode binder may be from about 1 wt% to 5 wt%, and an amount of the conductive agent may be from about 0.5 wt% to 5 wt% based on a solid content of the anode slurry.

Within the above range, thickening and improving adhesion effects from the binder may be effciently implemented.

For example, the conductive agent may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

As described above, the silicon-based active material may be included in the anode active material layer 120 to improve power and capacity of the secondary battery. Additionally, the acryl-based binder having high tensile strength may be included in the anode active material layer 120, so that repetition of expansion and contraction caused by the silicon-based active material during charging and discharging may be suppressed or reduced.

The acryl-based binder may have high tensile strength to cause electrode wrinkles at a relatively weak area of the electrode when charging/discharging is repeatedly performed. However, according to exemplary embodiments, a distance between a cathode tab 107 and anode tab 127 may be adjusted to prevent an electrode deformation and improve stability of the lithium secondary battery.

As illustrated in FIG. 1, the lithium secondary battery may include the cathode tab 107 and the anode tab 127 electrically connected to the cathode 100 and the anode 130, respectively. For example, the cathode tab 107 and the anode tab 127 may protrude from each of the cathode current collector 105 and the anode current collector 125 to extend to one end of an outer case 160. The cathode tab 107 and the anode tab 127 may be welded together with the one end of the outer case 160 to form an electrode lead (a cathode lead and an anode lead) that may protrude or may be exposed to an outside of the outer case 160.

In exemplary embodiments, the distance between the cathode tab 107 and the anode tab 127 may be adjusted to satisfy Equation 1 below according to a content of the acryl-based binder included in the anode active material layer 120.

[Equation 1]

$$3.6^{M/wt\%} + 95.1 \leq D_T/mm$$

In the Equation 1 above, M represents a content (wt%) of the acryl-based binder based on a total weight of the anode active material layer, $D_T$ is the distance (mm) between the anode tab and the cathode tab, and $1 \leq M \leq 4$).

For example, if the content of the acryl-based binder is less than 2 wt%, $D_T$ may be about 102mm or more. If the content of the acryl-based binder is from 2.5 wt% to 4 wt%, $D_T$ may be about 120mm or more.

In the relation of the content of the acryl-based binder and $D_T$ as shown in Equation 1, damages and failure of the anode 130 due to the electrode expansion and contraction may be prevented, and the electrode wrinkle may be suppressed while achieving an overall adhesive force of the anode active material layer 120. Accordingly, mechanical and chemical stability of the lithium secondary battery may be improved , and life-span of the battery may also be increased while implementing a high-density electrode.

For example, M in Equation 1 representing the content (wt%) of the acryl-based binder with respect to the total weight of the anode active material layer may be adjusted to a value from 1 to 4. Within the above range, life-span property of the lithium secondary battery may be effectively achieved.

In exemplary embodiments, the cathode tab 107 and the anode tab 127 may protrude in the same direction. For example, the electrode tab and the electrode lead may be formed in a single or mono direction. Thus, a spatial efficiency when packing a plurality of electrode assemblies may be enhanced, and an energy density of the anode 130 may be improved.

In the mono-unidirectional battery satisfying Equation 1 as described above, volume expansion and physical deformation of the anode 130 which may be caused by the silicon-based active material and the acryl-based binder may be prevented.

Specifically, the electrode wrinkle due to interference and overlap of stress at an area around the electrode tab when being charged and discharged may be prevented, and a local stress may be relieved to reduce a volume expansion ratio of the electrode.

In exemplary embodiments, an expansion ratio of the anode may be 40% or less in a fully charged state when satisfying the Equation 1. Thus, a pouch case may be properly designed in consideration of the volume expansion ratio in the fully charged state and the lithium secondary battery having a compact size may be provided.

The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may be also formed from a non-woven fabric including a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without loss by, e.g., precipitation or sedimentation. Therefore, the enhancement of power and capacity by utilizing the silicon-based active material may be effectively implemented.

In exemplary embodiments, an electrode cell may be defined by the cathode 100, the anode 130 and the separation layer 140, and a plurality of the electrode cells may be stacked to form an electrode assembly having, e.g., a jelly roll shape. For example, the electrode assembly may be formed by winding, laminating or folding of the separation layer 140. In some embodiments, the lithium secondary battery may include a plurality of the electrode assemblies.

FIG. 2 is a schematic cross-sectional view illustrating a lithium secondary battery in accordance with exemplary embodiments. For example, FIG. 2 is a cross-sectional view taken along the line I-I' shown in FIG. 1 in a thickness direction of the lithium secondary battery.

Referring to FIG. 2, the lithium secondary battery 200 may be accommodated in the outer case 160 and may include the electrode assembly as described with reference to FIG. 1 .

The electrode assembly may be accommodated in the outer case 160 together with an electrolyte to form the lithium secondary battery. In exemplary embodiments, the electrolyte may include a non-aqueous electrolyte solution.

The non-aqueous electrolyte solution may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

The lithium secondary battery may be fabricated into a cylindrical shape using a can, a prismatic shape, a pouch shape, a coin shape, etc.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

$Li[Ni_{0.88}Co_{0.1}Mn_{0.02}]O_2$ as a cathode active material, carbon black as a conductive agent and polyvinylidene fluoride (PVdF) as a binder were mixed in a weight ratio of 96.5:2:1.5 to prepare a cathode. The cathode slurry was uniformly applied to an aluminum foil having a thickness of 12 $\mu$m, and then vacuum dried at 130 °C and pressed to prepare a cathode for a lithium secondary battery.

8 parts by weight of silicon (Si), 1.5 parts by weight of an acryl-based binder and 0.5 parts by weight of CNT as a conductive agent and 90 parts by weight of a carbon-based active material were mixed based on a total solid content of an anode slurry to prepare the anode slurry. The anode slurry was uniformly coated on a copper foil having a thickness of 8 $\mu$m, and then vacuum dried at 130°C and pressed to form an anode.

The cathode and the anode obtained as described above were notched with a proper size and stacked, and a separator (polyethylene, thickness: 13$\mu$m) was interposed between the cathode and the anode to form an electrode cell. Each tab portion of the cathode and the anode was welded. A distance ($D_T$) between the cathode tab and the anode tab was formed to be 102 mm.

The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by dissolving 1M LiPF$_6$ in a mixed solvent of EC/EMC/DEC (25/45/30; volume ratio), and then 1 wt% of vinylene carbonate, 0.5 wt% of 1,3-propensultone (PRS), and 0.5 wt% of lithium bis(oxalato) borate (LiBOB) were added.

Example 2

A secondary battery was manufactured by the same method as that in Example 1, except that the binder content of the anode slurry was changed to 2.5 parts by weight, the content of the carbon-based active material was changed to 89 parts by weight, and the distance between the cathode and anode tabs ($D_T$) was formed to be 120 mm.

Example 3

A secondary battery was manufactured by the same method as that in Example 1, except that the binder content of the anode slurry was changed to 3.5 parts by weight, the content of the carbon-based active material was changed to 88 parts by weight, and the distance between the cathode and anode tabs ($D_T$) was formed to be 185 mm.

Comparative Example 1

A secondary battery was manufactured by the same method as that in Example 1, except that the distance between the cathode and anode tabs ($D_T$) was formed to be 60 mm.

Comparative Example 2

A secondary battery was manufactured by the same method as that in Example 1, except that the distance between the cathode and anode tabs ($D_T$) was formed to be 89 mm.

Comparative Example 3

A secondary battery was manufactured by the same method as that in Example 1, except that the binder content of the anode slurry was changed to 2.5 parts by weight, and the distance between the cathode and anode tabs ($D_T$) was formed to be 102 mm.

Comparative Example 4

A secondary battery was manufactured by the same method as that in Example 1, except that a content of Si was changed to 16 parts by weight, the binder content of the anode slurry was changed to 2.5 parts by weight, the content of the carbon-based active material was changed to 81 parts by weight, and the distance between the cathode and anode tabs ($D_T$) was formed to be 60 mm.

Comparative Example 5

A secondary battery was manufactured by the same method as that in Example 1, except that the binder content of the anode slurry was changed to 3.5 parts by weight, and the distance between the cathode and anode tabs ($D_T$) was formed to be 120 mm.

Comparative Example 6

A secondary battery was manufactured by the same method as that in Example 1, except that the binder content of the anode slurry was changed to 4.5 parts by weight, and the distance between the cathode and anode tabs ($D_T$) was formed to be 185 mm.

Experimental Example

(1) Evaluation on electrode wrinkles

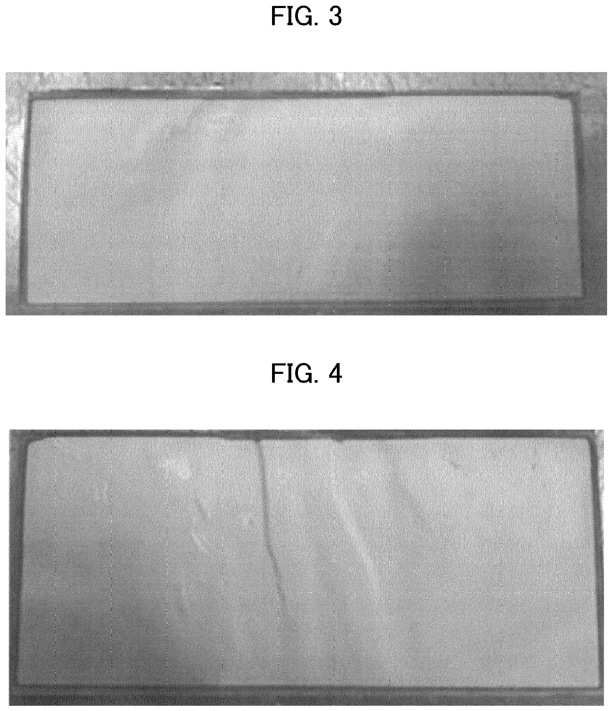

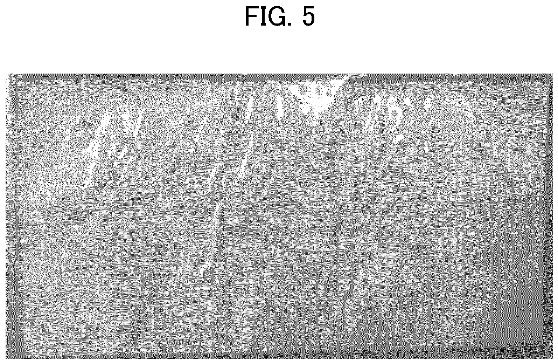

The lithium secondary batteries of Examples and Comparative Examples were each fully charged (CC/CV 0.5C 4.3V 0.05C CUT-OFF), and then the anode surfaces were visually observed to evaluate electrode wrinkles according to the following criteria. FIGS. 3 to 5 show electrode surface images from Example 1, Comparative Example 1 and Comparative Example 4, respectively.

<Wrinkle evaluation criteria>

×: Wrinkle not observed

○: Local wrinkle lines were observed on the electrode surface

◎: Wrinkles were generated entirely on the electrode surface

(2) Evaluation of anode expansion ratio

For each of the anode of Examples and Comparative Examples as prepared above, a volume expansion ratio of the electrode was calculated by comparing a thickness of the anode after fully charging to a thickness of the anode after being pressed.

(3) Charging/discharging efficiency

Charging (CC/CV 1/3C 4.2V 0.05C CUT-OFF) and discharging (CC 1/3C 2.5V CUT-OFF) were performed to the secondary batteries according to Examples and Comparative Examples, and initial charge capacity and discharge capacity were measured.
Charge-discharge efficiency was measured as a percentage value obtained by dividing the initial discharge capacity by the initial charge capacity.
The results are shown in Table 1 below.

[Table 1]

|  | Equation 1 | | Wrinkle Evaluation | Anode Expansion Ratio (%) | Charging/discharging efficiency (%) |
|---|---|---|---|---|---|
|  | $3.6^M + 95.1$ | $D_T$ (mm) |  |  |  |
| Example 1 | 101.93 | 102 | × | 30.8 | 99.9 |
| Example 2 | 119.69 | 120 | × | 31.9 | 99.8 |
| Example 3 | 183.62 | 185 | × | 29.5 | 99.9 |
| Comparative Example 1 | 101.93 | 60 | ○ | 35.7 | 99.6 |
| Comparative Example 2 | 101.93 | 89 | ○ | 35.3 | 99.7 |
| Comparative Example 3 | 119.69 | 102 | ◎ | 39.6 | 99.4 |

(continued)

|  | Equation 1 | | Wrinkle Evaluation | Anode Expansion Ratio (%) | Charging/discharging efficiency (%) |
|---|---|---|---|---|---|
|  | $3.6^M + 95.1$ | $D_T$ (mm) |  |  |  |
| Comparative Example 4 | 119.69 | 60 | ◎ | 40.2 | 98.5 |
| Comparative Example 5 | 183.62 | 120 | ◎ | 40.8 | 99.2 |
| Comparative Example 6 | 413.78 | 185 | ◎ | 48.9 | 98.1 |

Referring to Table 1, in Examples satisfying Equation 1, the electrode wrinkles and volume expansion were prevented to provide improved electrical performance.

In Comparative Examples, the wrinkles were detected around the tabs, and the anode volume expansion suppression and charge/discharge efficiency were also degraded.

**Claims**

1. A lithium secondary battery, comprising:

   an anode comprising an anode current collector and an anode active material layer formed thereon, the anode active material layer including an acryl-based binder;
   a cathode facing the anode;
   an anode tab electrically connected to the anode; and
   a cathode tab electrically connected to the cathode,

   wherein the lithium secondary battery satisfies Equation 1:

   [Equation 1]

   $$3.6^{M/wt\%} + 95.1 \leq D_T/mm$$

   wherein, in Equation 1, M is a content of the acryl-based binder expressed by weight percent (wt%) based on a total weight of the anode active material layer, $D_T$ is a distance expressed by millimeter (mm) between the anode tab and the cathode tab, and $1 \leq M \leq 4$.

2. The lithium secondary battery of claim 1, wherein the anode active material layer includes a silicon-based anode active material.

3. The lithium secondary battery of claim 2, wherein the silicon-based anode active material includes at least one selected from the group consisting of silicon (Si), a silicon alloy, silicon oxide, a silicon-carbon (Si-C) composite and a silicon alloy-carbon composite.

4. The lithium secondary battery of claim 2, wherein the anode active material layer further includes a carbon-based anode active material.

5. The lithium secondary battery of claim 4, wherein the carbon-based anode active material includes at least one selected from the group consisting of artificial graphite, natural graphite, amorphous carbon, a carbon fiber, cokes and pyrolytic carbon.

6. The lithium secondary battery of claim 2, wherein a content of the silicon-based anode active material is from 3 wt% to 40 wt% based on the total weight of the anode active material layer.

7. The lithium secondary battery of claim 1, wherein the acryl-based binder includes at least one polymer selected from the group consisting of an acrylic acid-based polymer, an acrylic lithium-based polymer and an acrylonitrile-based polymer.

8. The lithium secondary battery of claim 1, wherein the cathode tab and the anode tab protrude in the same direction.

9. The lithium secondary battery of claim 1, wherein an electrode assembly including the cathode tab and the anode tab is defined, and the lithium secondary battery includes a plurality of electrode assemblies.

10. The lithium secondary battery of claim 1, wherein a volume expansion ratio of the anode when being fully charged is 40% or less.

# FIG. 1

200

107    127

$D_T$

140

130

100

I

I'

# FIG. 2

140

110
105 } 100
110

120
125 } 130
120

160

FIG. 3

FIG. 4

FIG. 5

Europäisches
Patentamt

European
Patent Office

Office européen
des brevets

# EUROPEAN SEARCH REPORT

Application Number

EP 21 18 6341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/157682 A1 (HO KAM PIU [HK] ET AL) 23 May 2019 (2019-05-23) * page 3, paragraph 0058 – page 15, paragraph 0188; claims 1-20; figures 1,2; tables 1-6 * | 1-10 | INV. H01M4/133 H01M4/134 H01M4/36 H01M4/38 H01M4/48 |
| X | KR 2019 0136382 A (SK INNOVATION CO LTD [KR]) 10 December 2019 (2019-12-10) * page 2, paragraph 0005 – page 9, paragraph 0119; claims 1-9; tables 1,2 * | 1-10 | H01M4/587 H01M4/62 H01M10/0525 |
| X | KR 2020 0000158 A (SK INNOVATION CO LTD [KR]; ULSAN NAT INST SCIENCE & TECH UNIST [KR]) 2 January 2020 (2020-01-02) * page 6, paragraph 0064 – page 11, paragraph 0136; figure 1 * | 1-10 | ADD. H01M50/105 H01M4/02 |
| X | KR 2017 0107213 A (LG CHEMICAL LTD [KR]) 25 September 2017 (2017-09-25) * paragraph [0030] – paragraph [0126]; figure 1 * | 1-10 | |

TECHNICAL FIELDS
SEARCHED     (IPC)

H01M

The present search report has been drawn up for all claims

| Place of search | Date of completion of the search | Examiner |
|---|---|---|
| Munich | 3 December 2021 | Polisski, Sergej |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 18 6341

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2021

| Patent document cited in search report | | Publication date | Patent family member(s) | Publication date |
|---|---|---|---|---|
| US 2019157682 A1 | | 23-05-2019 | AU 2017364747 A1 | 16-05-2019 |
| | | | CA 3043254 A1 | 31-05-2018 |
| | | | CN 109983602 A | 05-07-2019 |
| | | | EP 3545574 A1 | 02-10-2019 |
| | | | JP 2019536234 A | 12-12-2019 |
| | | | KR 20190082819 A | 10-07-2019 |
| | | | SG 11201912783X A | 30-01-2020 |
| | | | TW 201824617 A | 01-07-2018 |
| | | | US 2019157682 A1 | 23-05-2019 |
| | | | WO 2018095283 A1 | 31-05-2018 |
| KR 20190136382 A | | 10-12-2019 | NONE | |
| KR 20200000158 A | | 02-01-2020 | NONE | |
| KR 20170107213 A | | 25-09-2017 | NONE | |

EPO FORM P0459

For more details about this annex : see Official Journal of the European Patent Office, No. 12/82

**EP 3 944 368 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200091043
- KR 101764072